# EUROPÄISCHE PATENTSCHRIFT

(11) **EP 3 865 749 B1**
(45) Veröffentlichungstag und Bekanntmachung des Hinweises auf die Patenterteilung: **30.08.2023**
(21) Anmeldenummer: 20157545.3
(22) Anmeldetag: 16.02.2020
(51) Int. Cl.: F16L 3/10, F16L 3/11, F16L 55/035, F16L 3/12

(54) **ROHRSCHELLE**
PIPE CLIP
COLLIER DE SERRAGE

(43) Veröffentlichungstag der Anmeldung: 18.08.2021
(73) Patentinhaber: Zurecon AG, 9053 Teufen AR (CH)
(72) Erfinder: PFLUGER, Gerd, 4625 Oberbuchsiten (CH)
(74) Vertreter: Rutz & Partner

(56) Entgegenhaltungen:
- WO-A1-81/00745
- KR-A- 20190 108 689
- US-A- 552 986
- US-A1- 2005 072 883

## Beschreibung

Die Erfindung betrifft eine Rohrschelle für die Installation von Rohren, einschliesslich Medienleitungen aller Art.

Rohrschellen und Vorrichtungen zu deren Montage sind z.B. im Produktkatalog der LANZ OENSINGEN AG, Juli 2017, Seite 117, gezeigt.

Rohrschellen bestehen oft aus zwei beidseitig miteinander verbindbaren Schalen, von denen die obere Schale fest montiert und die untere Schale jeweils einseitig gelöst und weggedreht wird, um ein Rohr in die obere Schale einzulegen und anschliessend mit der unteren Schale, die als Stützelement dient, zu fixieren. Zum Verschliessen der Rohrschelle wird die untere Schale, die einseitig mittels einer ersten Schraube mit der oberen Schale verbunden ist, zurückgedreht und mittels einer zweiten Schraube auf der anderen Seite mit der oberen Schale verbunden. Beim Zurückdrehen stösst die untere Schale jedoch regelmässig an das eingesetzte Rohr an und muss daher weiter gelöst oder nach unten gebogen werden, bis die Drehung vollzogen werden kann. Die Manipulation einer solchen Rohrschelle erfordert daher Geschick und Kraft des Monteurs, der die beschriebenen Manipulationen durchführen und gleichzeitig das eingesetzte Rohr halten muss. Rohrschellen dieser Art sind zudem nur für Rohre mit einem bestimmten Durchmesser einsetzbar. Sofern der Durchmesser zu gross ist, kann die Rohrschelle nur mit grossem Kraftaufwand und gleichzeitiger Deformation des installierten Rohrs geschlossen werden. Sofern der Rohrdurchmesser hingegen zu klein ist, so wird das Rohr nicht spielfrei gehalten. In diesem Fall können installierte Rohre und Leitungen beim Betrieb störende Vibrationen und Geräusche verursachen.

Aus der EP2325539A1 ist eine Rohrschelle bekannt, die ein U-Profil-förmiges Montageteil mit Seitenteilen aufweist, in denen Längsschlitze vorgesehen sind, in denen ein Niederhalter verschiebbar und fixierbar gehalten ist. Diese Rohrschelle ist relativ aufwendig ausgestaltet und erfordert verschiedene Manipulationen zur Installation eines Rohres oder einer Leitung, die an exponierten Lagen z.B. nahe der Decke nicht leicht auszuführen sind. Zur Fertigung der Rohrschelle sind in den Seitenteilen die Führungsschlitze vorzusehen. Ferner ist ein entsprechend ausgestalteter Niederhalter bereitzustellen und beidseits mittels Fixierschrauben zu montieren. Bei der Montage eines Rohrs ist der Niederhalter zu lösen, gegen das Rohr zu verschieben und anschliessend durch Anziehen der beiden Fixierschrauben zu fixieren. Falls das Rohr danach nur lose gehalten ist, sind wieder beide Fixierschrauben zu lösen, wonach der Niederhalter mit einer Hand gegen das Rohr zu drücken ist und die Fixierschrauben mit der anderen Hand und einem Schraubendreher fest zu ziehen sind. Die optimale Installation eines Rohrs ist daher nur mit entsprechendem Aufwand unter Einsatz beider Hände möglich, was insbesondere auf einer Leiter stehend Schwierigkeiten verursacht.

Zu beachten ist, dass normalerweise ein Werkzeug benötigt wird, welches unter erschwerten Bedingungen an verschiedenen Punkten der Rohrschelle in Eingriff mit den Fixierschrauben zu bringen ist.

Der vorliegenden Erfindung liegt daher die Aufgabe zugrunde, eine verbesserte Rohrschelle zu schaffen, mittels der Rohre, einschliesslich Leitungen aller Art, vorteilhaft installiert werden können.

Insbesondere ist eine einfach aufgebaute und kostengünstig herstellbare Rohrschelle zu schaffen, mit der Rohre auch unter erschwerten Installationsbedingungen einfach und schnell montierbar sind.

Der Installationsvorgang soll einfach und bequem ausführbar sein. Die Montage soll vorteilhaft ohne die Verwendung eines Werkzeugs möglich sein. Der Vorgang zur optimalen Fixierung eines Rohres soll bequem ausführbar sein. Dabei soll gewährleistet werden, dass die durch den Medientransport in den Rohren verursachte Geräuschentwicklung, unabhängig vom jeweiligen Durchmesser der installierten Rohre, minimal bleibt. Insbesondere soll dazu der Anpressdruck des Niederhalters an den installierten Rohren mit nur einem Handgriff einstellbar sein.

Die Rohrschelle soll universell einsetzbar sein und erlauben, Rohre mit stark voneinander abweichenden Durchmessern spielfrei und stabil zu halten. Ferner soll die Rohrschelle an weitere Anforderungen leicht anpassbar sein.

Die WO8100745A1 offenbart eine von einer Gewindestange gehaltene Rohrschelle mit einem Niederhalter, der durch zwei Schraubenmuttern mit der Gewindestange verbunden ist.

Die oben gennante Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die Rohrschelle umfasst ein Montageteil, das mit einer Gewindestange, die an einem Gebäudeteil montierbar ist, verbunden ist, und das eine Durchtrittsöffnung aufweist, durch die ein Rohr in einen Montageraum der Rohrschelle einführbar ist, ein Stützelement, auf das das Rohr abstützbar ist, und ein Fixierteil, das einen Niederhalter aufweist, mittels dessen das Rohr im Montageraum fixierbar ist.

Erfindungsgemäss ist vorgesehen, dass das Fixierteil fest oder drehbar mit der Gewindestange verbunden ist und dass das Montageteil und das Fixierteil koaxial zur Längsachse der Gewindestange gegeneinander verschiebbar sind, um das Rohr zu fixieren.

Vorzugsweise ist das Montageteil entlang der Gewindestange verschiebbar gehalten. In dieser Variante wird die Installationshöhe des eingelegten Rohres durch die Verschiebung des Montageteils bestimmt.

Alternativ ist das Montageteil von der Gewindestange entlang deren Längsachse unverschiebbar gehalten. In dieser Variante wird die Installationshöhe des eingelegten Rohres durch die Verschiebung des Niederhalters bestimmt.

In beiden Fällen kann somit eine Relativbewegung zwischen dem Montageteil und dem Niederhalter ausgeführt werden, um ein in den Montageraum eingeführtes Rohr zu fixieren.

Wenn das Montageteil und der Niederhalter beide entlang der Gewindestange verschiebbar gehalten werden,

kann die Rohrschelle bzw. das installierte Rohr durch Verschiebung des Montageteils und/oder des Niederhalters entlang der Längsachse der Gewindestange wahlweise auf eine bestimmte Höhe gefahren und fixiert werden. Das installierte Rohr kann durch Verschieben des Montageteils und/oder des Niederhalters fixiert werden.

Alle drei Varianten der erfindungsgemässen Rohrschelle sind einfach realisierbar und verwenden als integralen und zentralen Bestandteil die Gewindestange, die z.B. Teil eines Bolzenankers ist, der im Gebäudeteil, normalerweise in einer Gebäudedecke, verankert oder verspannt wird. Die Gewindestange kann auch mit einem Stahlträger oder einem anderen statischen Element verbunden werden.

Bei der Montage wird somit stets zuerst die Gewindestange bzw. der Bolzenanker stabil montiert, wonach das Montageteil und das Fixierteil montiert werden. Somit ist es möglich, dass entlang einer Medienstrasse zuerst die Bolzenanker montiert und erst anschliessend die weiteren Teile der Rohrschelle montiert werden.

Mit der Montage der Gewindestange, gegebenenfalls des Bolzenankers, ist somit bereits ein wesentlicher Teil der Rohrschelle installiert. Das Montageteil und das Fixierteil können, sofern sie nicht bereits vormontiert sind, in der Folge in einfacher Weise mittels Gewindeelementen, wie Schraubenmuttern oder Gewindehülsen montiert werden. Die erfindungsgemässe Rohrschelle besteht daher aus nur wenigen Elementen, die einfach gefertigt und montiert werden können und die den stabilen Bolzenanker als zentrales Element für die Montage und die Fixierung eines eingelegten Rohres verwenden. Da die Verstellfunktion oder Fixierfunktion der Rohrschelle mittels der Gewindestange realisiert wird, entfallen ansonsten verwendete Verstell- und Fixierelemente, die bei bekannten Lösungen weit weniger stabil realisiert sind.

Aufgrund der zentralen Anordnung der Gewindestange, die das zentrale Element der Rohrschelle bildet, ist auch nur ein zentraler Eingriff zu diesem stabil montierten Element notwendig, durch den ein installiertes Rohr fixiert und wieder gelöst werden kann. Die Einstellung der Rohrschelle kann zudem bequem und präzise erfolgen, da nur ein Verstellelement zu betätigen ist, um den Niederhalter oder das Montageteil entlang der Gewindestange gegen das eingelegte Rohr zu fahren. Das Lösen und Festziehen von Schrauben entfällt vorteilhafterweise.

Der resultierende Verstellmechanismus ist stabil und robust, weshalb ein Verschleiss der Rohrschelle oder Elementen davon auch nach langem Gebrauch nicht auftritt.

Erfindungsgemäss ist der Niederhalter von einer Gewindehülse, die drehbar mit dem Niederhalter verbunden ist und die mit einem Innengewinde in das Aussengewinde der Gewindestange eingreift, drehbar und entlang der Gewindestange verschiebbar gehalten. Durch eine Drehung der Gewindehülse kann der Niederhalter relativ zum Montageteil verschoben und gegen ein eingelegtes Rohr gefahren oder von diesem wieder gelöst werden. Die Gewindehülse ist vorzugsweise mit einem Stellrad verbunden, sodass die Einstellung der Rohrschelle mit einer Hand bequem vollzogen werden kann.

Vorzugsweise ist der Niederhalter plattenförmig ausgebildet oder aus einem plattenförmigen Element, wie einem Blechstück, geformt und mit einer nach aussen geöffneten Ausnehmung versehen, in der ein an der Gewindehülse vorgesehenes Kopplungsstück, welches vorzugsweise eine Ringnut aufweist, gehalten ist. Die Gewindehülse kann an der Gewindestange vormontiert sein, wonach der Niederhalter seitlich auf das Kopplungsstück aufgeschoben wird.

In einer vorzugsweisen Ausgestaltung ist eine in die Gewindehülse eindrehbare und auf die Gewindestange aufdrehbare Zwischenhülse vorgesehen, die ein mit der Gewindestange verbindbares Innengewinde und ein mit der Gewindehülse verbindbares Aussengewinde aufweist. Die Gewindehülse und die Zwischenhülse wirken teleskopische zusammen, sodass der Niederhalter über eine grössere Distanz bewegt werden kann. Es können somit Rohre mit kleinem Durchmesser und Rohre mit relativ grossem Durchmesser in derselben Rohrschelle installiert werden.

Das Montageteil weist vorzugsweise eine Montageöffnung auf, durch die die Gewindestange hindurch geführt und von wenigstens einem Gewindeelement, gegebenenfalls einer Schraubenmutter fest oder entlang der Gewindestange verschiebbar gehalten wird.

Vorzugsweise ist die Montageöffnung, z.B. durch einen Schlitz, nach aussen geöffnet und zur Aufnahme des Gewindeelements, gegebenenfalls der Schraubenmutter, vorgesehen, das bzw. die dazu vorzugsweise mit einer Ringnut versehen ist. Der Rand der Montageöffnung, gegebenenfalls auch der Rand des nach aussen geführten Schlitzes, kann daher in die Ringnut eingeführt werden, wonach das Montageteil in der Ringnut gehalten ist und durch Drehung des Gewindeelements entlang der Gewindestange verschiebbar ist.

Die Gewindestange ist vorzugsweise integraler Teil oder lösbar verbundener Teil eines Segmentankers, der, gegebenenfalls mittels einer Arretiermutter, am Gebäudeteil fixierbar ist. Segmentanker dieser Art sind kostengünstig im Handel erhältlich und können, sofern nicht bereits vorhanden, mittels einer Verbindungshülse mit einer Gewindestange ergänzt werden.

In vorzugsweisen Ausgestaltungen ist die Durchtrittsöffnung des Montageteils durch ein Verschlussteil abschliessbar. Durch das Verschlussteil wird das Montageteil zu einem in sich geschlossenen Rahmen ergänzt, in dem ein eingelegtes Rohr gefangen ist.

Das Stützelement, welches der Lagerung des installierten Rohrs dient, kann am entsprechend ausgestalteten Montageteil oder am Verschlussteil vorgesehen sein. Das Stützelement kann gebogen oder v-förmig ausgebildet sein, sodass für jeden Rohrdurchmesser zwei Stützpunkte resultieren.

Das Montageteil kann U-förmig ausgebildet nach unten geöffnet sein, sodass die Durchtrittsöffnung an der Unterseite der Rohrschelle liegt und durch ein Verschlussteil abgeschlossen wird, welches das Stützelement umfasst.

Das Montageteil kann auch C-förmig oder G-förmig ausgebildet sein und an der Unterseite mit dem Stützelement versehen sein. In diesem Fall ist die Durchtrittsöffnung auf einer Seite des Montageteils vorgesehen und vorzugsweise durch ein Verschlussteil abschliessbar. In diesem Fall ergibt sich der Vorteil, dass das Rohr in das montierte Montageteil eingehängt werden kann, ohne dass ein Verschlussteil erforderlich ist. Der Installationsvorgang kann sequenziell durchgeführt werden. Zuerst wird der Bolzenanker mit der Gewindestange montiert. Anschliessend werden das Montageteil und das Fixierteil montiert. Nun kann bereits ein Rohr in das Montageteil eingehängt werden. Sofern dies erwünscht ist, wird abschliessend ein Verschlussteil, sofern es nicht bereits vormontiert ist, montiert und verschlossen. Vorzugsweise ist das Verschlussteil durch ein Gelenk mit Montageteil verbunden und seitlich oder frontal nach aussen drehbar.

In der C-förmigen Ausgestaltung des Montageteils wird das eingelegte Rohr nur leicht durch das z.B. V-förmige Stützelement gehalten. In der G-förmigen Ausgestaltung des Montageteils ist anschliessend an das Stützelement ein verkürztes Seitenteil vorgesehen, durch das ein eingelegtes Rohr seitlich in Position gehalten wird. Insbesondere bei der G-förmigen Ausgestaltung des Montageteils kann auf ein Verschlussteil verzichtet werden.

Der Niederhalter und/oder das Verschlussteil und/oder das Montageteil sind vorzugsweise aus Blech geformt und/oder mit einem elastischen Lagerelement versehen, mittels dessen bzw. mittels denen ein installiertes Rohr elastisch gehalten wird.

Nachfolgend wird die Erfindung anhand von Zeichnungen näher erläutert. Dabei zeigt:
- Fig. 1a: die eingangs beschriebene bekannte Rohrschelle 1', die ein U-Profil-förmiges und nach unten geöffnetes Montageteil 12 aufweist, das mit einem Verschlussteil 11, welches ein Stützelement 100 umfasst, abschliessbar ist und das zwei Seitenteile 121, 123 aufweist, an denen ein Fixierteil 2', welches einen Niederhalter 21 umfasst, verschiebbar gehalten ist;
- Fig. 1b: die bekannte Rohrschelle 7 von Fig. 1a mit einem installierten Rohr 6 und dem nach unten gefahrenen Fixierteil 2', dessen Niederhalter 21 mit einem elastischen Element 25 am installierten Rohr 6 anliegt;
- Fig. 2a: eine erfindungsgemässe Rohrschelle 1 in einer ersten prinzipiellen Ausgestaltung mit dem von einer Gewindestange 91, gegebenenfalls einem Segmentanker, gehaltenen Montageteil 12, dem Verschlussteil 11, welches ein Stützelement 100 umfasst, und mit einem Fixierteil 2, das eine Gewindehülse 22 aufweist, die drehbar mit einem Niederhalter 21 verbunden und durch ein Innengewinde mit der Gewindestange 91 verbindbar ist;
- Fig. 2b: die Rohrschelle 1 von Fig. 2a mit dem mit der Gewindestange 91 verschraubten Fixierteil 2 und mit einem Rohr 6, das in den Montageraum 10 der Rohrschelle 1 eingesetzt wurde;
- Fig. 2c: die Rohrschelle 1 von Fig. 2b während des Verschliessens des Verschlussteils 11;
- Fig. 2d: die Rohrschelle 1 von Fig. 2c während des Fixierens des installierten Rohrs 6 durch Betätigung der Gewindehülse 22, die entlang der Gewindestange 91 nach unten gedreht wird;
- Fig. 3a: die Gewindestange 91, ein mit der Gewindestange 91 verbundenes und für die Montage des Montageteils 12 vorgesehenes Gewindeteil 92, eine Zwischenhülse 23 sowie das Fixierteil 2 mit einer Gewindehülse 22, die auf die gegebenenfalls vorgesehene Zwischenhülse 23 oder direkt auf die Gewindestange 91 geschraubt wird;
- Fig. 3b: das durch die Zwischenhülse 23 mit der Gewindestange 91 verbundene Fixierteil 2 von Fig. 3a;
- Fig. 3c: das durch die Zwischenhülse 23 mit der Gewindestange 91 verbundene Fixierteil 2 von Fig. 3a, das durch Drehen eines mit der Gewindehülse 22 verbundenen Stellrads 24 entlang der Längsachse der Gewindestange 91 nach oben verschoben wurde;
- Fig. 4: eine Gewindehülse 22 in einer vorzugsweisen Ausgestaltung mit einem Kopplungselement 221, das eine Ringnut 2210 aufweist, die der Aufnahme eines vorzugsweise ausgestalteten Niederhalters 21 dient, der eine nach aussen geöffnete Montageöffnung 210 aufweist;
- Fig. 5a: eine erfindungsgemässe Rohrschelle 1 in einer zweiten prinzipiellen Ausgestaltung mit einem Montageteil 12, das durch ein mit einem Stellrad 24 verbundenes Gewindeelement 92 mit einer Gewindestange 91, gegebenenfalls einem Segmentanker, verbunden ist, mit einem Verschlussteil 11 und mit einem Fixierteil 2, das eine Gewindehülse 22 aufweist, die drehbar mit einem Niederhalter 21 und durch ein Innengewinde mit der Gewindestange 91 verbunden ist;
- Fig. 5b: die Rohrschelle 1 von Fig. 5a mit dem Montageteil 12, welches durch Drehen des Stellrads 24 entlang der Gewindestange 91 nach oben verschoben wurde;
- Fig. 5c: die Rohrschelle 1 von Fig. 5b während des Verschliessens des Verschlussteils 11;
- Fig. 5d: die Rohrschelle 1 von Fig. 5c während des Fixierens des installierten Rohrs 6 durch Betätigung des Stellrads 24 mit Verschiebung des Montageteils 12 nach oben;
- Fig. 6a: einen Segmentanker 910 mit einer einstückig daran vorgesehenen Gewindestange 91 und einem Gewindeelement 92, das in der ersten prinzipiellen Ausgestaltung der Rohrschelle 1 dem Halten des Niederhalters 21 und in der zweiten prinzipiellen Ausgestaltung der Rohrschelle 1 dem Halten des Montageteils 12 dient;
- Fig. 6b: das Montageteil 12 mit einer durch einen Schlitz 1221 nach aussen geöffneten Montageöffnung 1220 im Mittelteil 122; und
- Fig. 7: eine erfindungsgemässe Rohrschelle 1 mit einem C-förmigen oder G-förmigen Montageteil 12, welches das Stützelement 100 umfasst und dessen Durchtrittsöffnung 120 nur optional durch ein Verschlussteil 11 abschliessbar ist.

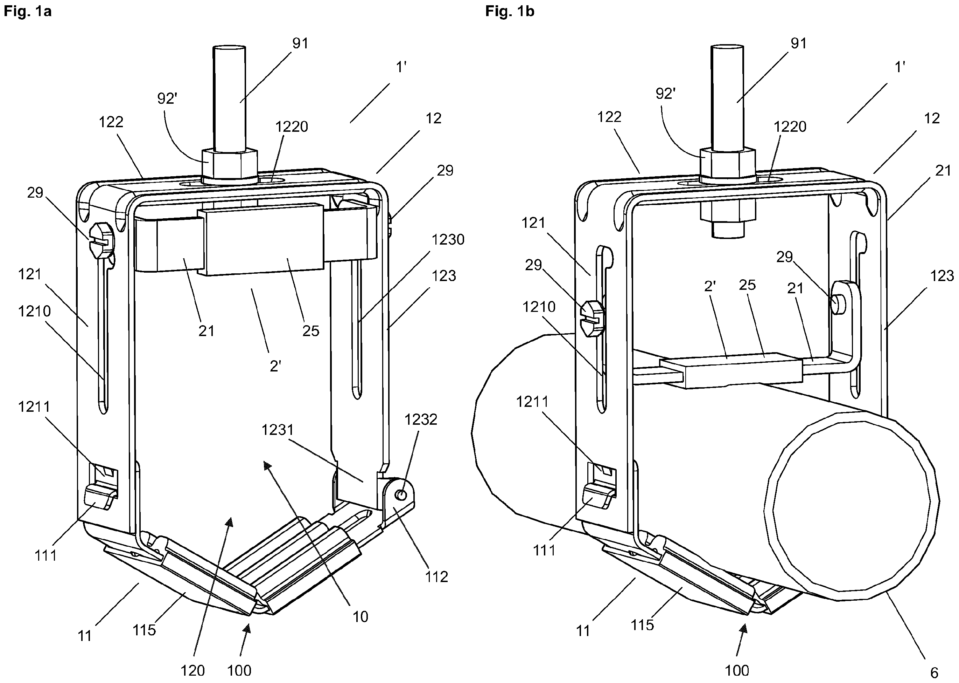

Fig. 1a zeigt die eingangs beschriebene bekannte Rohrschelle 1` mit einem U-Profil-förmigen und nach unten geöffneten Montageteil 12, das ein Mittelteil 122 und beidseits senkrecht dazu ausgerichtete Seitenteile 121, 123 aufweist. Das Mittelteil 122 weist eine Montageöffnung 1220 auf, durch die eine Gewindestange 91 hindurch geführt ist. Unterhalb und oberhalb des Mittelteils 122 ist die Gewindestange 91 mit Schraubenmuttern 92` versehen, mittels denen das Montageteil 12 fixiert wird.

Die unteren Enden der Seitenteile 121, 123 des Montageteils 12 sind mit Endstücken eines Verschlussteils 11, welches ein Stützelement 100 umfasst, verbunden bzw. verbindbar. Das untere Ende des ersten Seitenteils 121 weist eine Verschlussöffnung 1211 auf, in die ein Verschlusshaken 111 eingehängt ist, der am zugewandten Endstück des Verschlussteils 11 vorgesehen ist. Am anderen Endstück weist das Verschlussteil 11 ein Scharnierelement 112 auf, das durch eine Scharnierwelle 1232 drehbar mit einem Scharnierteil 1231 verbunden ist, das am unteren Ende des zweiten Seitenteils 123 vorgesehen ist. Das Verschlussteil 11 kann daher am ersten Seitenteil 121 eingehängt und ausgehängt und um die Scharnierwelle 1232 gedreht werden, um die an der Unterseite des Montageteils 12 vorgesehene Durchtrittsöffnung 120 zu öffnen und zu verschliessen. Nach dem Öffnen der Durchtrittsöffnung 120 kann ein zu installierendes Rohr 6 in den durch das Montageteil 12 begrenzten Montageraum 10 eingeführt werden. Nach dem Verschliessen der Durchtrittsöffnung 120 ruht das eingelegte Rohr 6 auf dem Stützelement 100 des Verschlussteils 11 bzw. auf einem daran vorgesehenen elastischen Lagerelement 115. Das Verschlussteil 11 bildet in dieser Ausgestaltung somit gleichzeitig der Stützteil 100 für das installierte Rohr 6.

An den Seitenteilen 121, 123 sind Längsschlitze 1210, 1230 vorgesehen, entlang denen ein Fixierteil 2' verschiebbar ist, das einen plattenförmigen Niederhalter 2' aufweist, der U-förmig ausgebildet ist und in den an beiden abgebogenen Endstücken Fixierschrauben 29 eingesetzt sind, die in den Längsschlitzen 1210, 1230 der Seitenteile 121, 123 gehalten und geführt sind. Das Fixierteil 2' bzw. der Niederhalter 21, der mit einem elastischen Lagerelement 25 versehen ist, kann entlang den Längsschlitzen 1210, 1230 nach unten und nach oben gefahren werden, um ein eingelegtes Rohr 6 zu fixieren oder wieder freizugeben.

Fig. 1b zeigt die bekannte Rohrschelle 7 von Fig. 1a mit einem installierten Rohr 6, welches auf dem Stützelement 100 des Verschlussteils 11 ruht, und mit dem nach unten gefahrenen Fixierteil 2', dessen Niederhalter 21 mit dem elastischen Element 25 am installierten Rohr 6 anliegt.

Eingangs wurde beschrieben, dass diese Rohrschelle 1' mit einem Niederhalter, der beidseitig verschiebbar gehalten und durch Schrauben fixierbar ist einerseits einen relativ hohen Herstellungsaufwand erfordert und andererseits nicht leicht zu betätigen ist.

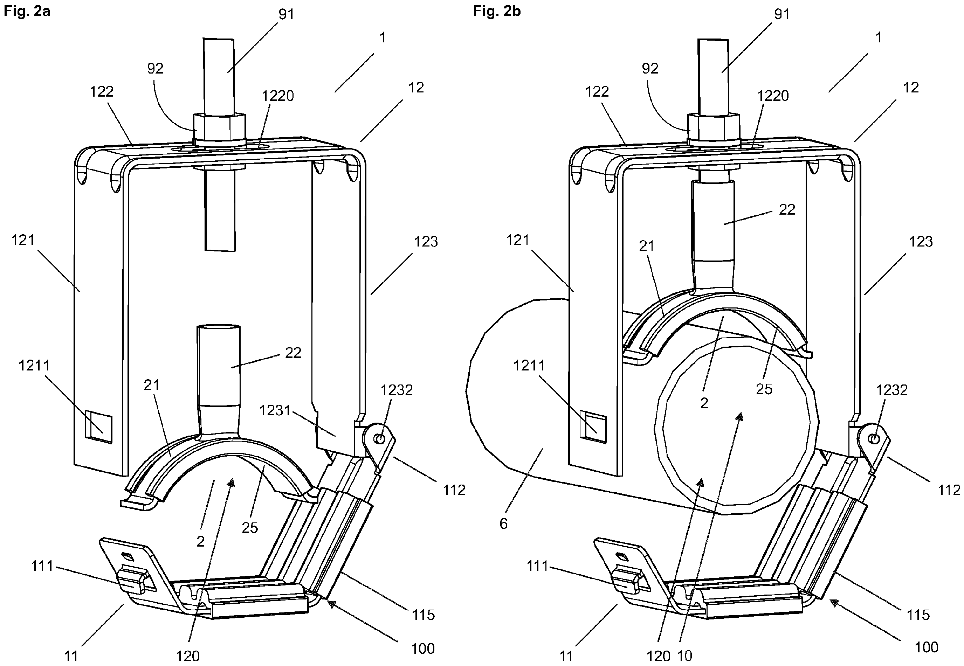

Fig. 2a zeigt eine erfindungsgemässe Rohrschelle 1 in einer ersten prinzipiellen Ausgestaltung mit dem von einer Gewindestange 91, gegebenenfalls einem Segmentanker, gehaltenen Montageteil 12 und dem Verschlussteil 11 der Rohrschelle 1` von Fig. 1a.

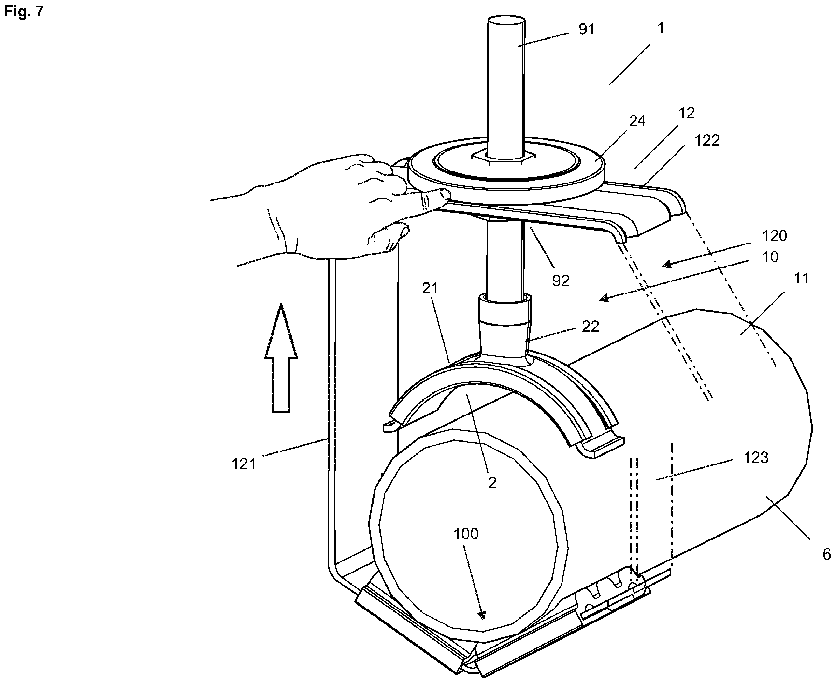

Das Montageteil 12 kann von der bekannten Rohrschelle von Fig. 1a übernommen werden oder kann auch eine beliebige andere Form aufweisen. Wesentlich ist, dass das Montageteil 12 eine Durchtrittsöffnung 120 zum Einlegen eines Rohrs aufweist und dass das Montageteil 12 (siehe Fig. 7) oder das optional vorgesehene Verschlussteil 11 ein Stützelement 100 zur Lagerung eines Rohrs aufweist.

Das Verschlussteil 11, welches durch Gelenkelemente 112, 1231, 1232 drehbar mit einem Seitenteil 123 des Montageteils 12 verbunden ist, ist nach unten gedreht, sodass die an der Unterseite des U-förmigen Montageteils 12 vorgesehene Durchtrittsöffnung 120 freigelegt ist und ein Rohr eingelegt werden kann.

Die Rohrschelle 1 von Fig. 2a unterscheidet sich im Wesentlichen von der Rohrschelle 1` von Fig. 1a durch die Ausgestaltung des Fixierteils 2, welches mit der Gewindestange 91 verbindbar ist. Dazu umfasst das Fixierteil 2 in dieser Ausgestaltung eine Gewindehülse 22, die ein Innengewinde aufweist und die auf die Gewindestange 91 aufgeschraubt werden kann. Die Gewindehülse 22 ist drehbar mit einem Niederhalter 21 verbunden, der durch Betätigung der Gewindehülse 22 nach unten und nach oben gefahren werden kann. Der vorzugsweise elastische Niederhalter 21 ist in dieser Ausgestaltung bogenförmig ausgebildet. Alternativ kann der Niederhalter 21 auch gerade ausgerichtet oder V-förmig ausgebildet sein.

Die Gewindehülse 22, die drehbar mit dem Niederhalter 21 verbunden ist, kann daher gedreht werden, ohne dass der Niederhalter 21 mit dreht.

Fig. 2b zeigt die Rohrschelle 1 von Fig. 2a mit dem mit der Gewindestange 91 verschraubten Fixierteil 2 und mit einem Rohr 6, das durch die Durchtrittsöffnung 120 in den Montageraum 10 der Rohrschelle 1 eingesetzt wurde.

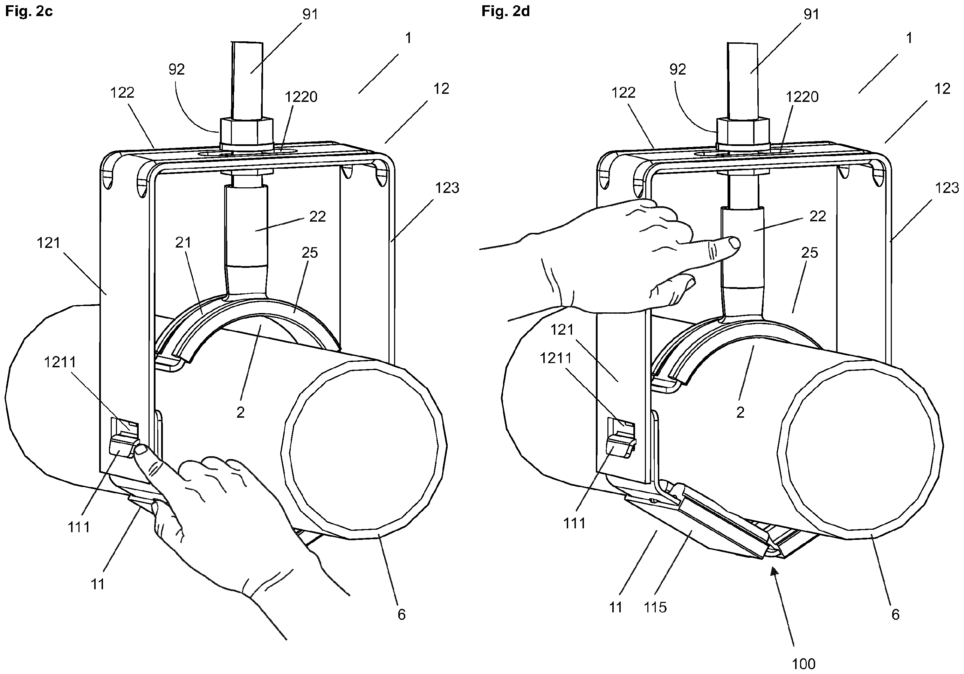

Fig. 2c zeigt die Rohrschelle 1 von Fig. 2b während des Verschliessens des Verschlussteils 11. Das Verschlussteil 11 wurde nach oben gedreht und mit dem Verschlusshaken 111 in die Verschlussöffnung 1211 des Seitenteils 121 des Montageteils 12 eingehängt. Das Montageteil 12 bildet nun zusammen mit dem Verschlussteil 11 einen in sich geschlossenen Rahmen, in dem das eingelegte Rohr 6 gefangen ist. Nach dem Verschliessen der Durchtrittsöffnung 120 ist das Rohr 6 in der Rohrschelle lose gehalten.

Fig. 2d zeigt die Rohrschelle 1 von Fig. 2c während des Fixierens des installierten Rohrs 6. Durch Betätigung bzw. Drehen der Gewindehülse 22 wird das Fixierteil 2 entlang der Gewindestange 91 nach unten geführt, bis der Niederhalter 21, der mit einem elastischen Lagerelement 25 versehen ist, am Rohr 6 anliegt und dieses gegen das Stützelement 100 des Niederhalters 11 bzw. gegen das daran vorgesehene elastische Lagerelement 115 angedrückt wird.

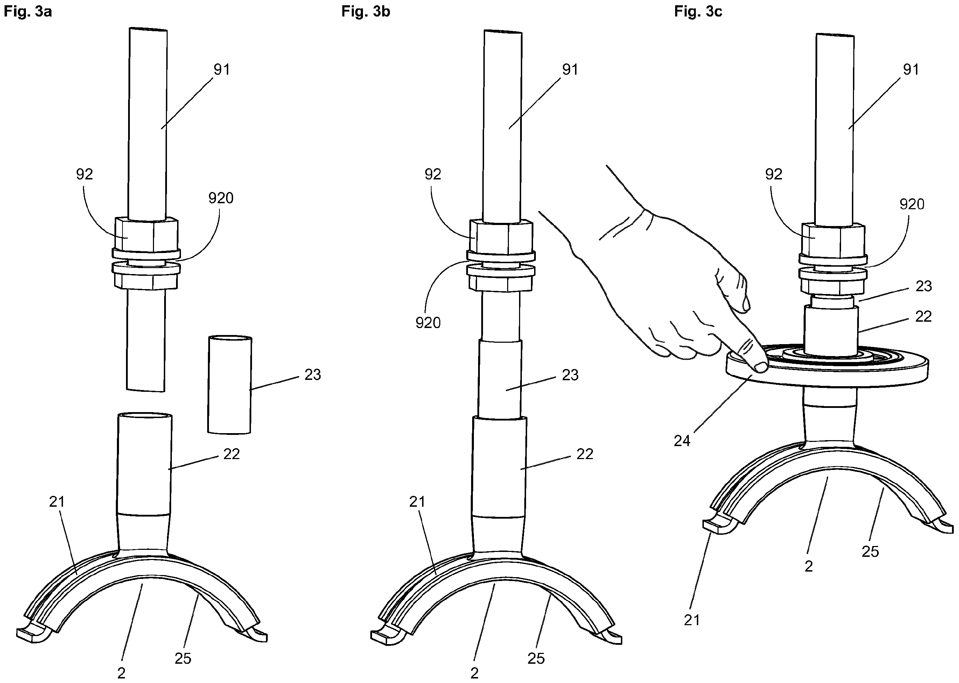

Fig. 3a zeigt die Gewindestange 91, ein mit der Gewindestange 91 verbundenes und für die Montage des Montageteils 12 vorgesehenes Gewindeteil 92, eine Zwischenhülse 23 sowie das bei entsprechendem Innendurchmesser der Gewindehülse 22 direkt oder bei entsprechendem Innendurchmesser der Gewindehülse 22 durch die Zwischenhülse 23 mit der Gewindestange 91 verbindbare Fixierteil 2.

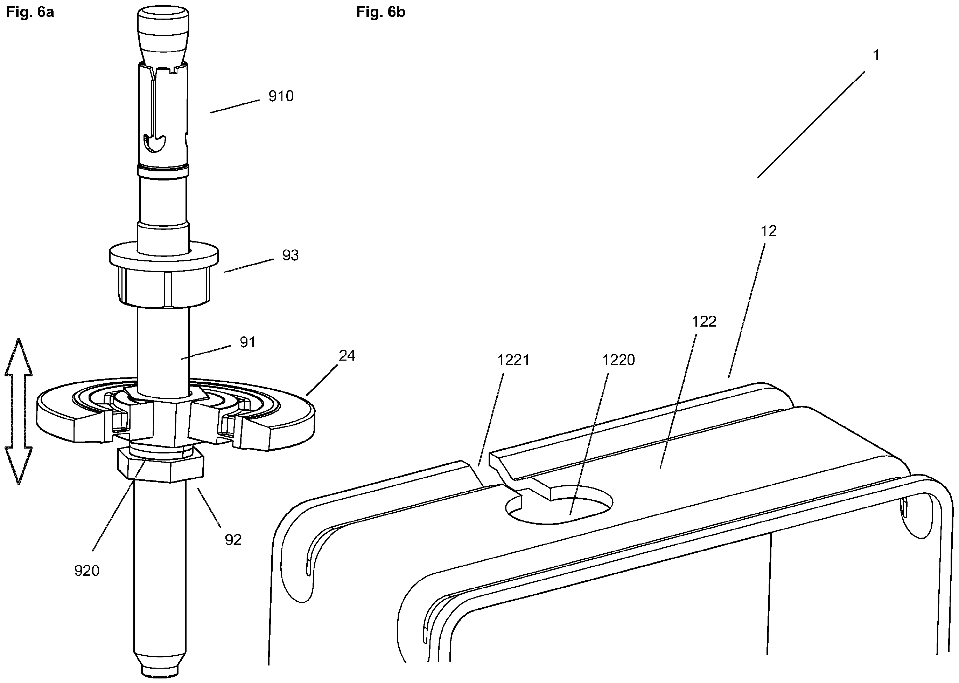

Das vormontierte Gewindeteil 92 ist in der Art einer Schraubenmutter vorgesehen, die etwa in der Mitte mit einer Ringnut 920 versehen ist. Bei dieser Ausgestaltung kann ein Montageteil 12, welches eine z.B. durch einen Schlitz 1221 nach aussen geöffnete Montageöffnung 1220 aufweist, seitlich auf das Gewindeteil 92 aufgeschoben werden. Ein derartiges Montageteil 12 mit der entsprechenden Montageöffnung 1220, 1221 im Mittelteil 122 ist in Fig. 6b gezeigt. Sofern die Montageöffnung 1220 in sich geschlossen ist, wird die Gewindestange 91 durch die Montageöffnung 1220 hindurch geführt, wonach das zwischen zwei Schraubenmuttern 92 liegende Mittelteil 122 durch Anziehen derselben fixiert wird.

Fig. 3b zeigt das durch die Zwischenhülse 23 mit der Gewindestange 91 verbundene Fixierteil 2 von Fig. 3a. Die Zwischenhülse 23 und die Verbindungshülse 22 sind nach unten gedreht, sodass der Niederhalter 21 teleskopische maximal nach unten geführt wurde.

Fig. 3c zeigt das durch die Zwischenhülse 23 mit der Gewindestange 91 verbundene Fixierteil 2 von Fig. 3a, das durch Drehen eines mit der Gewindehülse 22 verbundenen Stellrads 24 entlang der Längsachse der Gewindestange 91 nach oben verschoben wurde.

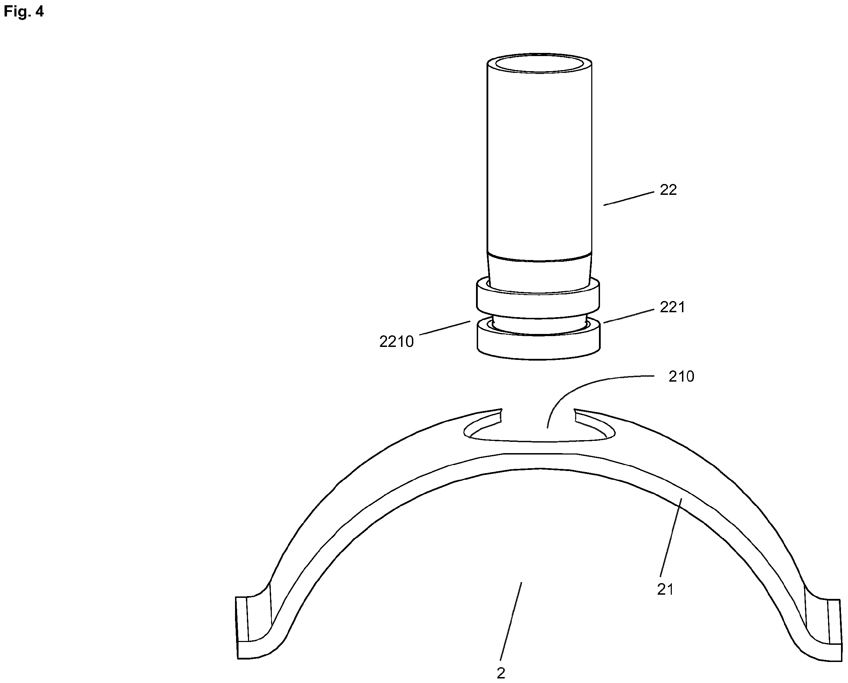

Fig. 4 zeigt eine Gewindehülse 22 in einer vorzugsweisen Ausgestaltung mit einem Kopplungselement 221, dass eine Ringnut 2210 aufweist, die der Aufnahme eines vorzugsweise ausgestalteten Niederhalters 21 dient, der eine nach aussen geöffnete Montageöffnung 210 aufweist. Diese Ausgestaltung des Niederhalters 21 und eines entsprechenden Kopplungselements 221 kann bei allen wird vorzugsweise bei allen Ausgestaltungen der erfindungsgemässen Rohrschelle gleich oder funktionsgleich vorgesehen. Der Niederhalter 21 und die Gewindehülse 22 sind somit drehbar miteinander verbunden, weshalb die Gewindehülse 22 entlang der Gewindestange 91 nach oben oder nach unten gedreht werden können, ohne dass der Niederhalter 21 mitdreht.

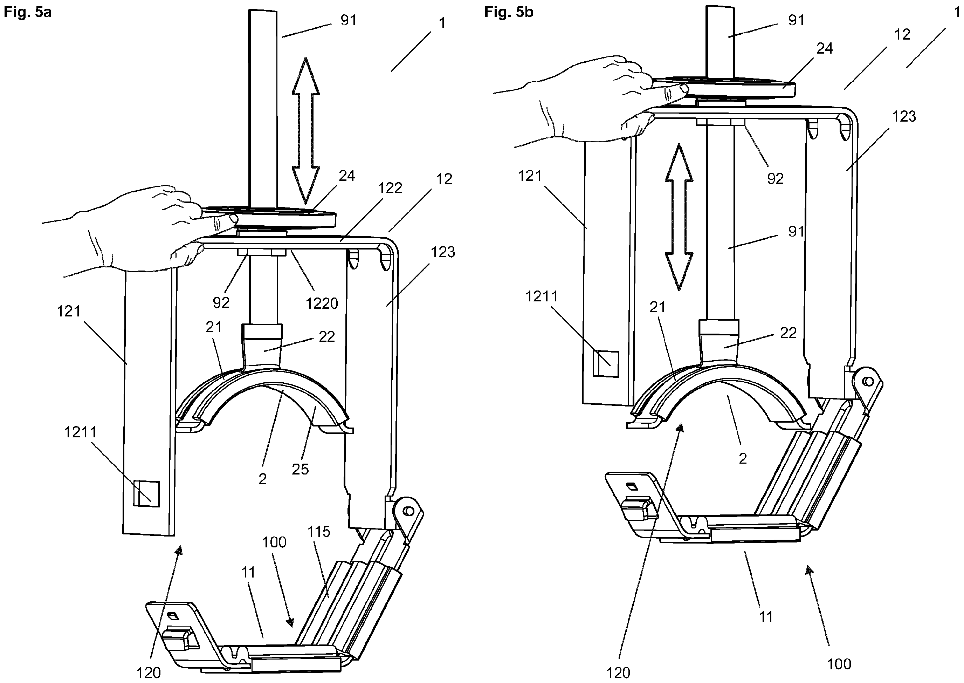

Fig. 5a zeigt eine erfindungsgemässe Rohrschelle 1 in einer zweiten prinzipiellen Ausgestaltung mit einem Montageteil 12 und einem Verschlussteil 11, die im Wesentlichen denjenigen der Rohrschelle 1 von Fig. 2a entsprechen. Die Montageöffnung 1220 kann hingegen bedarfsweise an das Gewindeteil 92 angepasst sein, welches das Montageteil 12 hält und durch Drehen entlang der Gewindestange 91 verschiebbar ist. Zur bequemen Betätigung des Gewindeteils 92 ist dieses mit einem Stellrad 24 verbunden. Durch Drehen des Stellrads 24 wird das Gewindeteil 92 gedreht und mit diesem das Montageteil 12 entlang der Gewindestange 91 nach unten oder nach oben verschoben.

Das Fixierteil 2 umfasst eine Gewindehülse 22, die vorzugsweise drehbar mit einem Niederhalter 21 und durch ein Innengewinde mit der Gewindestange 91 verbunden ist. Die Gewindehülse 22, die auch auf eine Gewindemutter reduziert werden kann, kann fest oder drehbar mit der Gewindestange 91 verbunden werden. In der Folge kann das Montageteil 12 nach unten oder nach oben verschoben werden, um ein eingelegtes Rohr 6 zwischen dem Niederhalter 21 und dem Stützelement 100 des Verschlussteils 11 bzw. den daran vorgesehenen Lagerelementen 25, 115 zu fixieren. Somit wird nicht der Niederhalter 21 relativ zu Montageteil 12, sondern das Montageteil 12 relativ zum Niederhalter 21 verschoben.

Fig. 5b zeigt die Rohrschelle 1 von Fig. 5a mit dem Montageteil 12, welches durch Drehen des Stellrads 24 entlang der Gewindestange 91 nach oben verschoben wurde. Der Abstand zwischen dem Niederhalter 21 und dem Stützteil 100 kann daher über einen weiten Bereich verstellt werden, sodass Rohre 6 mit unterschiedlichen Durchmessern in der Rohrschelle 1 aufgenommen werden können. Damit sich der Niederhalter 21 an unterschiedliche Rohrdurchmesser anpassen kann, ist er vorzugsweise flexibel und/oder v-förmig und/oder gerade ausgebildet.

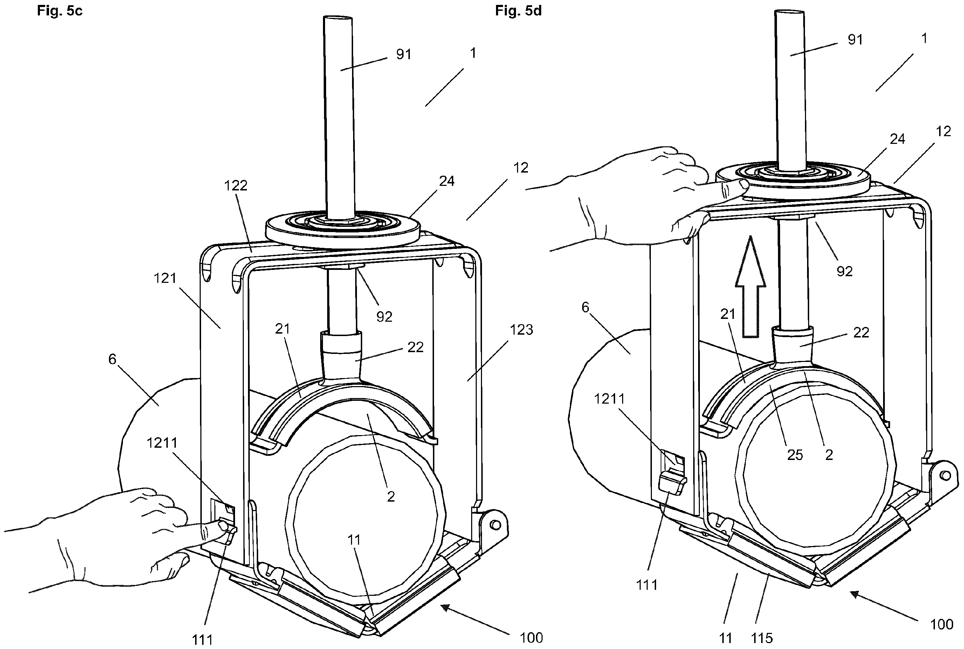

Fig. 5c zeigt die Rohrschelle 1 von Fig. 5b während des Verschliessens des Verschlussteils 11.

Fig. 5d zeigt die Rohrschelle 1 von Fig. 5c während des Fixierens des installierten Rohrs 6. Durch Betätigung des Stellrads 24 wird das Montageteil 12 mit dem eingelegten Rohr 6 nach oben verschoben, bis das durch das Stützteil 100 bzw. das Verschlusselement 11 gestützte Rohr 6 am Niederhalter 21 anliegt. Durch weiteres Drehen des Stellrads 24 können die elastischen Lagerelemente 25, 115 komprimiert werden, sodass das Rohr 6 spielfrei und elastisch gehalten wird. Schwingungen des Rohrs 6 werden daher durch die elastischen Lagerelemente 25, 115 absorbiert. Besonders vorteilhaft ist, dass der gewünschte Anpressdruck bequem mit einer Hand durch Drehen des Stellrads 24 eingestellt werden kann, ohne dass Schrauben mehrfach gelöst und wieder angezogen werden müssen. Damit sich das Stellrad 24 nicht selbsttätig dreht, wird z.B. ein Federelement vorgesehen, welches in das Stellrad 24 eingreift und beim Drehen desselben verdrängt werden muss.

Fig. 6a zeigt einen Segmentanker 910 mit einer einstückig daran vorgesehenen Gewindestange 91 und einem Gewindeelement 92, das in der ersten prinzipiellen Ausgestaltung der Rohrschelle 1 dem Halten des Niederhalters 21 und in der zweiten prinzipiellen Ausgestaltung dem Halten des Montageteils 12 dienen kann und das mit dem Stellrad 24 verbunden ist, dass mit einem Viertelschnitt gezeigt ist. Das Gewindeelement 92 weist eine Ringnut 920 auf, die den Rand einer Montageöffnung 1220, 210 des Montageteils 12 oder des Niederhalters 21 aufnehmen kann.

Die Gewindestange ist ferner optional mit einer Arretiermutter 93 versehen, mittels der der Segmentanker 910 an der Gebäudedecke fixiert werden kann.

Fig. 6b zeigt das Montageteil 12 mit der durch einen Schlitz 1221 nach aussen geöffneten Montageöffnung 1220 im Mittelteil 122. Der Rand der Montageöffnung 1220 wird bei der Montage der Gewindestange 91 durch die Ringnut 920 aufgenommen.

Fig. 7 zeigt eine erfindungsgemässe Rohrschelle 1 mit einem Montageteil 12, welches das Stützelement 100 umfasst und dessen Durchtrittsöffnung 120 nur optional durch ein Verschlussteil 11 abschliessbar ist. Das Montageteil 12 umfasst das Mittelteil 122, welches durch das Gewindeelement 92 mit der Gewindestange 91 verbunden ist, und daran anschliessend das erste Seitenteil 121, an das ein V-förmiges Stützelement 100 anschliesst. In dieser Ausgestaltung ist das Montageelement 12 zumindest annähernd C-förmig ausgebildet. Ein durch die Durchtrittsöffnung 120 in den Montageraum 10 eingeführtes Rohr 6 wird durch das Stützelement 100 gestützt, aber seitlich nur wenig gehalten, wenn das schematisch gezeigte optionale Verschlussteil 11 nicht vorgesehen ist.

Vorteilhaft ist daher eine G-förmige Ausgestaltung des Montageteils 12, bei der an das Stützteil 101 ein zweites Seitenteil 123 anschliesst, das in der Folge das eingelegte Rohr 6 seitlich hält.

In beiden Varianten kann ein Verschlussteil 11 optional vorgesehen werden, das beispielsweise durch ein Scharnier mit dem Mittelteil 122 verbunden und durch Kopplungselemente mit dem zweiten Seitenteil 123 oder dem Stützelement 100 verbunden wird.

Das zweite Seitenteil 123 kann verkürzt sein, sodass die Durchtrittsöffnung 120 genügend gross ist. Alternativ kann auch ein elastisches zweites Seitenteil 123 vorgesehen werden, welches mit entsprechendem Kraftaufwand deformiert wird, um ein Rohr 6 in die Rohrschelle 1 einzulegen oder daraus zu entnehmen. Selbsttätig kann sich das Rohr 6 in diesem Fall nicht aus der Rohrschelle 1 lösen.

## Patentansprüche

1. Rohrschelle (1) mit einem Montageteil (12), das mit einer Gewindestange (91), die an einem Gebäudeteil montierbar ist, verbunden ist, und das eine Durchtrittsöffnung (120) aufweist, durch die ein Rohr (6) in einen Montageraum (10) der Rohrschelle (1) einführbar ist, mit einem Stützelement (100), auf das das Rohr (6) abstützbar ist, und mit einem Fixierteil (2), das einen Niederhalter (21) aufweist, mittels dessen das Rohr (6) im Montageraum (10) fixierbar ist, wobei das Fixierteil (2) fest oder drehbar mit der Gewindestange (91) verbunden ist und wobei das Montageteil (12) und das Fixierteil (2) koaxial zur Längsachse der Gewindestange (91) gegeneinander verschiebbar sind, um das Rohr (6) zu fixieren, **dadurch gekennzeichnet, dass** der Niederhalter (21) von einer Gewindehülse (22), die drehbar mit dem Niederhalter (21) verbunden ist und die mit einem Innengewinde in das Aussengewinde der Gewindestange (91) eingreift, drehbar und entlang der Gewindestange (91) verschiebbar gehalten ist.

2. Rohrschelle (1) nach Anspruch 1, **dadurch gekennzeichnet, dass** das Montageteil (12) entlang der Gewindestange (91) verschiebbar gehalten ist.

3. Rohrschelle (1) nach Anspruch 1 oder 2, **dadurch gekennzeichnet, dass** der Niederhalter (21) plattenförmig ausgebildet oder aus einem plattenförmigen Element, wie einem Blechstück, geformt ist, wobei der Niederhalter (21) mit einer nach aussen geöffneten Ausnehmung (210) versehen ist, in der ein an der Gewindehülse (22) vorgesehenes Kopplungsstück (221), welches vorzugsweise eine Ringnut (2210) aufweist, gehalten ist.

4. Rohrschelle (1) nach einem der Ansprüche 1 - 3, **dadurch gekennzeichnet, dass** eine in die Gewindehülse (22) eindrehbare und auf die Gewindestange (91) aufdrehbare Zwischenhülse (23) vorgesehen ist, die ein mit der Gewindestange (91) verbindbares Innengewinde und ein mit der Gewindehülse (22) verbindbares Aussengewinde aufweist.

5. Rohrschelle (1) nach einem der Ansprüche 1 - 4, **dadurch gekennzeichnet, dass** das Montageteil (12) eine Montageöffnung (1220) aufweist, durch die die Gewindestange (91) hindurch geführt und von wenigstens einem Gewindeelement, gegebenenfalls einer Schraubenmutter (92) fest oder entlang der Gewindestange (91) verschiebbar gehalten ist.

6. Rohrschelle (1) nach Anspruch 5, **dadurch gekennzeichnet, dass** die Montageöffnung (1220) nach aussen geöffnet ist und der Aufnahme des Gewindeelements, gegebenenfalls der Schraubenmutter (92) dient, das bzw. die dazu vorzugsweise mit einer Ringnut (920) versehen ist.

7. Rohrschelle (1) nach einem der Ansprüche 1 - 6, **dadurch gekennzeichnet, dass** die Gewindestange (91) integraler Teil oder lösbar verbundener Teil eines Segmentankers ist, der, gegebenenfalls mittels einer Arretiermutter (93), im Gebäudeteil fixierbar ist.

8. Rohrschelle (1) nach einem der Ansprüche 1 - 7, **dadurch gekennzeichnet, dass** die Durchtrittsöffnung (120) des Montageteils (12) durch ein Verschlussteil (11) der Rohrschelle (1) abschliessbar ist.

9. Rohrschelle (1) nach Anspruch 8, **dadurch gekennzeichnet, dass** das Verschlussteil (11) beidseits durch Kopplungselemente (1211, 111) mit dem Montageteil (12) verbindbar ist oder dass das Verschlussteil (11) auf einer Seite durch Kopplungselemente (1211, 111) mit dem Montageteil (12) verbindbar und auf der anderen Seite durch ein Gelenk (1231, 1232, 112) mit dem Montageteil (12) verbunden ist.

10. Rohrschelle (1) nach einem der Ansprüche 8 oder 9, **dadurch gekennzeichnet, dass** das Stützelement (100) ein Teil des Montageteils (12) ist oder das Stützelement (100) ein Teil des Verschlussteils (11) ist.

11. Rohrschelle (1) nach einem der Ansprüche 1 - 10, **dadurch gekennzeichnet, dass** der vorzugsweise flexible Niederhalter (21) gebogen oder v-förmig ausgebildet ist und/oder dass das vorzugsweise flexible Stützelement (100) gebogen oder v-förmig ausgebildet ist.

12. Rohrschelle (1) nach einem der Ansprüche 8 - 11, **dadurch gekennzeichnet, dass** das Montageteil (12) ein Mittelteil (122) und beidseits daran anschliessend ein erstes Seitenteil (121) und ein zweites Seitenteil (123) aufweist, deren Enden je mit den Endstücken des Verschlussteils (11), das vorzugsweise das Stützelement (100) bildet, verbunden oder verbindbar sind.

13. Rohrschelle (1) nach einem der Ansprüche 1 - 11, **dadurch gekennzeichnet, dass** das Montageteil (12) ein Mittelteil (122) und einseitig daran anschliessend ein erstes Seitenteil (121) aufweist, an das das Stützelement (100) anschliesst, welches auf der dem ersten Seitenteil (121) gegenüberliegenden Seite vorzugsweise mit einem entsprechend verkürzten zweiten Seitenteil (123) verbunden ist, welches durch die Durchtrittsöffnung (120) vom Mittelteil (122) getrennt ist.

14. Rohrschelle (1) nach einem der Ansprüche 8 - 11, **dadurch gekennzeichnet, dass** das Montageteil (12) U-förmig ausgebildet ist und durch das Verschlussteil (11), welches das Stützelement (100) umfasst, abschliessbar ist, oder dass das Montageteil (12) C-förmig oder G-förmig ausgebildet ist und das Stützelement (100) umfasst und gegebenenfalls durch das Verschlussteil (11) abschliessbar ist.

## Claims

1. Pipe clamp (1) with a mounting part (12), which is connected to a threaded rod (91), which is mountable on a building part, and which has a passage opening (120), through which a pipe (6) is insertable into a mounting space (10) of the pipe clamp (1), with a support element (100), on which the pipe (6) is supportable, and with a securing part (2), which has a holding-down member (21) by means of which the pipe (6) is fixable in the mounting space (10), wherein the securing part (2) is fixedly or rotatably connected to the threaded rod (91) and wherein the mounting part (12) and the securing part (2) are displaceable relative to one another coaxially with respect to the longitudinal axis of the threaded rod (91) in order to fix the pipe (6), **characterised in, that** the holding-down member (21) is held by a threaded sleeve (22), which is rotatably connected to the holding-down member (21) and which engages with an internal thread in the external thread of the threaded rod (91), rotatably and displaceably along the threaded rod (91).

2. Pipe clamp (1) according to claim 1, **characterised in, that** the mounting part (12) is held displaceably along the threaded rod (91).

3. Pipe clamp (1) according to claim 1 or 2, **characterised in, that** the holding-down member (21) is plate-shaped or formed from a plate-shaped element, such as a piece of sheet metal, wherein the holding-down member (21) is provided with an outwardly open recess (210) in which a coupling piece (221) provided on the threaded sleeve (22), which preferably has an annular groove (2210), is held.

4. Pipe clamp (1) according to one of the claims 1 - 3, **characterised in, that** an intermediate sleeve (23) is provided which is screwable into the threaded sleeve (22) and is screwable onto the threaded rod (91) and which has an internal thread connectable to the threaded rod (91) and an external thread connectable to the threaded sleeve (22).

5. Pipe clamp (1) according to one of the claims 1-4, **characterised in, that** the mounting part (12) has a mounting opening (1220) through which the threaded rod (91) is passed and is held firmly or displaceably along the threaded rod (91) by at least one threaded element, possibly a screw nut (92).

6. Pipe clamp (1) according to claim 5, **characterised in, that** the mounting opening (1220) is open to the outside and serves to receive the threaded element, possibly the screw nut (92), which is preferably provided with an annular groove (920) for this purpose.

7. Pipe clamp (1) according to one of the claims 1 - 6, **characterised in, that** the threaded rod (91) is an integral part or detachably connected part of a segment anchor which is fixable in the building part, possibly by means of a locking nut (93).

8. Pipe clamp (1) according to one of the claims 1 - 7, **characterised in, that** the passage opening (120) of the mounting part (12) is closable by a closing member (11) of the pipe clamp (1).

9. Pipe clamp (1) according to claim 8, **characterised in, that** the closing member (11) is connectable on both sides by coupling elements (1211, 111) to the mounting part (12) or that the closing member (11) is connectable on one side by coupling elements (1211, 111) to the mounting part (12) and on the other side by a joint (1231, 1232, 112) to the mounting part (12).

10. Pipe clamp (1) according to one of the claims 8 or 9, **characterised in, that** the support element (100) is a part of the mounting part (12) or the support element (100) is a part of the closing member (11).

11. Pipe clamp (1) according to one of the claims 1 - 10, **characterised in, that** the preferably flexible holding-down member (21) is bent or v-shaped and/or that the preferably flexible support element (100) is bent or v-shaped.

12. Pipe clamp (1) according to one of the claims 8 - 11, **characterised in, that** the mounting part (12) comprises a middle part (122) and, adjoining it on both sides, a first side part (121) and a second side part (123), the ends of which are connected or connectable to the end parts of the closing member (11), which preferably forms the support element (100).

13. Pipe clamp (1) according to one of the claims 1 - 11, **characterised in, that** the mounting part (12) has a central part (122) and, adjoining it on one side, a first side part (121) adjoined by the support element (100) which, on the side opposite the first side part (121), is preferably connected to a correspondingly shortened second side part (123) which is separated from the central part (122) by the passage opening (120).

14. Pipe clamp (1) according to one of the claims 8 - 11, **characterised in, that** the mounting part (12) is U-shaped and is closable by the closing member (11), which comprises the support element (100), or that the mounting part (12) is C-shaped or G-shaped and comprises the support element (100) and is closable by the closing member (11).

## Revendications

1. Bride pour tuyaux (1) avec une élément de montage (12), qui est relié à une barre filetée (91), qui est montable à une partie de bâtiment, et qui présente une ouverture de passage (120), à travers laquelle un tuyau (6) est insérable dans un espace de montage (10) de la bride pour tuyaux (1), avec un élément de support (100), sur lequel le tuyau (6) est supportable, et avec un élément de fixation (2), qui présente un maintien en position basse (21) au moyen duquel le tuyau (6) est fixable dans l'espace de montage (10), dans lequel la partie de fixation (2) est reliée de manière fixe ou rotative à la barre filetée (91) et dans lequel l'élément de montage (12) et l'élément de fixation (2) peuvent être déplacés l'un par rapport à l'autre coaxialement à l'axe longitudinal de la barre filetée (91), afin de fixer le tuyau (6), **caractérisé en ce que** l'élément de maintien en position basse (21) est maintenu de manière rotative et déplaçable le long de la barre filetée (91) par un manchon fileté (22) qui est relié de manière rotative à l'élément de maintien en position basse (21) et qui s'engage par un filetage intérieur dans le filetage extérieur de la barre filetée (91).

2. Bride pour tuyaux (1) selon la revendication 1, **caractérisé en ce que** l'élément de montage (12) est maintenu de manière déplaçable le long de la barre filetée (91).

3. Bride pour tuyaux (1) selon la revendication 1 ou 2, **caractérisé en ce que** l'élément de maintien en position basse (21) est réalisé en forme de plaque ou est formé à partir d'un élément en forme de plaque, tel qu'un élément en tôle, dans lequel l'élément de maintien en position basse (21) étant pourvu d'un évidement (210) ouvert vers l'extérieur, dans lequel est maintenue une pièce d'accouplement (221) prévue sur le manchon fileté (22), laquelle présente de préférence une rainure annulaire (2210).

4. Bride pour tuyaux (1) selon une des revendications 1 - 3, **caractérisé en ce qu'**il est prévu une douille intermédiaire (23) pouvant être vissée dans le manchon fileté (22) et pouvant être vissée sur la barre filetée (91), qui présente un filetage intérieur pouvant être relié à la barre filetée (91) et un filetage extérieur pouvant être relié au manchon fileté (22).

5. Bride pour tuyaux (1) selon une des revendications 1 - 4, **caractérisé en ce que** l'élément de montage (12) présente une ouverture de montage (1220) à travers laquelle la barre filetée (91) est guidée et maintenue fixement ou de manière déplaçable le long de la barre filetée (91) par au moins un élément fileté, éventuellement un écrou à vis (92).

6. Bride pour tuyaux (1) selon la revendication 5, **caractérisé en ce que** l'ouverture de montage (1220) est ouverte vers l'extérieur et sert à recevoir l'élément fileté, éventuellement l'écrou (92), qui est de préférence pourvu à cet effet d'une rainure annulaire (920).

7. Bride pour tuyaux (1) selon une des revendications 1 - 6, **caractérisé en ce que** la barre filetée (91) fait partie intégrante ou est reliée de manière amovible à un ancrage de segment qui est fixable, éventuellement au moyen d'un écrou d'arrêt (93), dans la partie de bâtiment.

8. Bride pour tuyaux (1) selon une des revendications 1 - 7, **caractérisé en ce que** l'ouverture de passage (120) de l'élément de montage (12) peut être fermée par une pièce de fermeture (11) de la bride pour tuyaux (1).

9. Bride pour tuyaux (1) selon la revendication 8, **caractérisé en ce que** la pièce de fermeture (11) peut être reliée des deux côtés à l'élément de montage (12) par des éléments de couplage (1211, 111) ou que la pièce de fermeture (11) peut être reliée d'un côté à l'élément de montage (12) par des éléments de couplage (1211, 111) et est reliée de l'autre côté à l'élément de montage (12) par une articulation (1231, 1232, 112).

10. Bride pour tuyaux (1) selon une des revendications 8 ou 9, **caractérisé en ce que** l'élément de support (100) est une partie de l'élément de montages (12) ou que l'élément de support (100) est une partie de la pièce de fermeture (11).

11. Bride pour tuyaux (1) selon une des revendications 1 - 10, **caractérisé en ce que** l'élément de maintien en position basse (21), de préférence flexible, est courbé ou réalisé en forme de V et/ou que l'élément de support (100), de préférence flexible, est courbé ou réalisé en forme de V.

12. Bride pour tuyaux (1) selon une des revendications 8 - 11, **caractérisé en ce que** l'élément de montage (12) présente une partie centrale (122) et, des deux côtés de celle-ci, une première partie latérale (121) et une deuxième partie latérale (123), dont les extrémités sont reliées ou peuvent être reliées chacune aux pièces d'extrémité de la partie de fermeture (11), qui forme de préférence l'élément de support (100).

13. Bride pour tuyaux (1) selon une des revendications 1 - 11, **caractérisé en ce que** l'élément de montage (12) présente une partie centrale (122) et, se raccordant d'un côté à celle-ci, une première partie latérale (121) à laquelle se raccorde l'élément de support (100) qui, sur le côté opposé à la première partie latérale (121), est de préférence relié à une deuxième partie latérale (123) raccourcie en conséquence, qui est séparée de la partie centrale (122) par l'ouverture de passage (120).

14. Bride pour tuyaux (1) selon une des revendications 8 - 11, **caractérisé en ce que** l'élément de montage (12) est réalisé en forme de U et peut être fermé par la pièce de fermeture (11), qui comprend l'élément de support (100), ou que l'élément de montage (12) est réalisé en forme de C ou de G et comprend l'élément de support (100) et peut éventuellement être fermé par la pièce de fermeture (11).
